# EUROPEAN PATENT APPLICATION

(11) **EP 4 773 272 A1**
(43) Date of publication of application: **08.07.2026**
(21) Application number: 24919736.9
(22) Date of filing: 12.09.2024
(51) Int. Cl.: H01M 10/04, G01N 21/95, H01M 10/058, H01M 10/052

(54) **BATTERY CELL ADHESIVE APPLICATION SYSTEM AND METHOD**

(30) Priority: 26.01.2024 CN 202410108993
(71) Applicant: Contemporary Amperex Technology Co., Limited, Ningde, Fujian 352100 (CN)
(72) Inventor: XU, Deming, Ningde, Fujian 352100 (CN); HUANG, Shumao, Ningde, Fujian 352100 (CN); ZHENG, Nishan, Ningde, Fujian 352100 (CN); HUANG, Wenfang, Ningde, Fujian 352100 (CN); CHEN, Yupei, Ningde, Fujian 352100 (CN); MENG, Pengfei, Ningde, Fujian 352100 (CN); CAO, Zerong, Ningde, Fujian 352100 (CN)
(74) Representative: Lorenz Seidler Gossel Part. mbB
(86) International application number: PCT/CN2024/118555
(87) International publication number: WO 2025/156656

(57) **Abstract**

This application discloses a cell adhesive attachment system and method, related to the field of batteries. The cell adhesive attachment system includes: a welding device (11, 81), configured to weld a tab (10b) of a cell (10a) to an adapting piece (10c) to obtain a target cell (100); a battery inspection apparatus (12, 82), configured to inspect the target cell (100), where the battery inspection apparatus (12, 82) includes: an image acquisition device (22), configured to acquire an image of a tab area (10d) of the target cell (100); and a light source (21), including multiple sub-light sources arranged circumferentially along an image acquisition channel of the image acquisition device (22), and configured to project light onto the tab area (10d), where under different operating modes of the light source (21), an on/off state of at least one of the sub-light sources varies; an adhesive attachment device (13, 83), configured to perform adhesive attachment processing on the obtained target cell (100); and a transfer device (14, 84), configured to transfer the welded target cell (100) to the battery inspection apparatus (12, 82) and to transfer the target cell (100) with a normal inspection result to the adhesive attachment device (13, 83).

## Description

### CROSS-REFERENCE TO RELATED APPLICATIONS

This application claims priority to the Chinese Patent Application No. 202410108993.8, filed on January 26, 2024 and entitled "BATTERY PRODUCTION SYSTEM AND METHOD", which is incorporated herein by reference in its entirety.

### TECHNICAL FIELD

This application relates to the field of batteries, and specifically, to a cell adhesive attachment system and method.

### BACKGROUND

Due to process and equipment limitations, certain defects may occur during the production of lithium batteries, necessitating various inspection methods to identify these defects and improve battery yield. For example, after pairing bare cells, tab welding is required, followed by ultrasonic welding inspection of the welded tabs. A charge coupled device (Charge Coupled Device, CCD) visual inspection system is used to identify different defects in the tab area to ensure the performance of the cell. Detected defects include insufficient weld marks, absence of blue adhesive, incomplete tab coverage by blue adhesive, and the like.

### SUMMARY

In view of the above issues, this application provides a cell adhesive attachment system and method capable of improving accuracy of tab defect inspection.

According to a first aspect, this application provides a cell adhesive attachment system, including: a welding device, configured to weld a tab of a cell to an adapting piece to obtain a target cell; a battery inspection apparatus, configured to inspect the target cell, where the battery inspection apparatus includes: an image acquisition device, configured to acquire an image of a tab area of the target cell; and a light source, including multiple sub-light sources arranged circumferentially along an image acquisition channel of the image acquisition device, and configured to project light onto the tab area, where under different operating modes of the light source, an on/off state of at least one of the sub-light sources varies; an adhesive attachment device, configured to perform adhesive attachment processing on the obtained target cell; and a transfer device, configured to transfer the welded target cell to the battery inspection apparatus and to transfer the target cell with a normal inspection result to the adhesive attachment device.

In the technical solution of the embodiments of this application, the light source of the battery inspection apparatus includes the image acquisition device and the multiple sub-light sources arranged circumferentially along the image acquisition channel of the image acquisition device. Under different operating modes, an on/off state of at least one of the sub-light sources varies, enabling flexible control of the angle of light projected onto the tab area of the cell through different operating modes, allowing defects in the tab area to be clearly presented in the image and improving the accuracy of defect inspection. Additionally, the battery inspection apparatus is positioned between the welding device and the adhesive attachment device, so that adhesive attachment is performed on the cell after the tab area is confirmed to be normal, avoiding obstruction of the tab area by the adhesive or failure to detect cracks caused by reflections after adhesive attachment, improving the accuracy of defect inspection.

In some embodiments, at least one of the sub-light sources of the light source includes multiple light source modules positioned at different distances from the image acquisition device. In the technical solution of the embodiments of this application, the sub-light source includes light modules positioned at different distances from the image acquisition device, allowing further flexible control of at least one of an angle and intensity of light projected onto the tab area of the target cell by controlling the on/off states of different light modules, thereby increasing the flexibility of light source adjustment and enhancing the adaptability of operating modes of the battery inspection apparatus.

In some embodiments, different light source modules belonging to a same sub-light source are positioned at different distances from the tab area. In the technical solution of the embodiments of this application, different light source modules belonging to a same sub-light source are positioned at different distances from the tab area, so that light of the light source modules is not blocked by another light source module when light is projected onto the tab area.

In some embodiments, the light source has a dome-shaped structure with a through-hole at a top. In the technical solution of the embodiments of this application, the dome-shaped structure as a whole enhances the comprehensiveness of light angle coverage and facilitates maintaining the stability of the relative positions between sub-light sources and light source modules.

In some embodiments, the light source includes four sub-light sources, where the sub-light source is a sector-ring area with a central angle of 90 degrees, where a first sub-light source is adjacent to a second sub-light source and a fourth sub-light source; the first sub-light source and a third sub-light source each include two or more light source modules positioned at different distances from the image acquisition device, and shadows of the second sub-light source and the fourth sub-light source are in an extension direction of the tab; under an operating state, for the first sub-light source and the third sub-light source, a light source module farthest from the image acquisition device is turned on, and a light source module closest to the image acquisition device is turned off; and under an operating state, for the second sub-light source and the fourth sub-light source, all the light source modules are turned on.

In the technical solution of the embodiments of this application, the sub-light sources of the light source are divided into four angles, including two directions in which shadows are along the extension of the tab and two directions in which shadows are perpendicular to the extension of the tab. The angle of light projection matches a tab deployment direction of the cell. For the extension direction of the tab, light projection is performed at the widest range of angles to increase an amount of projected light, reducing the impact of light blockage by a side of the cell that is higher than the tab, thereby improving the clarity of defects at the root of the tab in the image. For the direction perpendicular to the extension of the tab, an amount of top light is reduced, allowing tab defects corresponding to a side light direction to be presented more clearly, thus improving the accuracy and efficiency of defect inspection.

In some embodiments, for the battery inspection apparatus, under a first operating mode of the light source, the light source modules of the first sub-light source except the light source module closest to the image acquisition device are turned on, and all the light source modules of the second sub-light source, the third sub-light source, and the fourth sub-light source are turned off. In the technical solution of the embodiments of this application, light is controlled to be projected in one direction in which a shadow is perpendicular to the extension direction of the tab, avoiding the influence of light from other directions on the presentation of tab defects in the image, which facilitates the exposure of tab defects corresponding to the light projection direction. By turning off the light source module closest to the image acquisition device, the amount of top light projection is reduced, preventing excessive top light from affecting the clarity of defect presentation in the image, further facilitating the exposure of tab defects and improving the accuracy and comprehensiveness of defect inspection.

In some embodiments, for the battery inspection apparatus, under a second operating mode of the light source, all the light source modules of the second sub-light source are turned on, and all the light source modules of the first sub-light source, the third sub-light source, and the fourth sub-light source are turned off. In the technical solution of the embodiments of this application, light is controlled to be projected in one direction in which a shadow is perpendicular to the extension direction of the tab, avoiding the influence of light from other directions on the presentation of tab defects in the image. For the extension direction of the tab, light projection is performed at the widest range of angles to increase the amount of projected light, reducing the impact of light blockage by a side of the cell that is higher than the tab, thereby improving the clarity of tab defects in the image.

In some embodiments, for the battery inspection apparatus, under a third operating mode of the light source, all the light source modules of the third sub-light source except the light source module closest to the image acquisition device are turned on, and all the light source modules of the first sub-light source, the second sub-light source, and the fourth sub-light source are turned off. In the technical solution of the embodiments of this application, light is controlled to be projected in one direction in which a shadow is perpendicular to the extension direction of the tab, avoiding the influence of light from other directions on the presentation of tab defects in the image, which facilitates the exposure of tab defects corresponding to the light projection direction. By turning off the light source module closest to the image acquisition device, the amount of top light projection is reduced, preventing excessive top light from affecting the clarity of defect presentation in the image, further facilitating the exposure of tab defects and improving the accuracy and comprehensiveness of defect inspection.

In some embodiments, for the battery inspection apparatus, under a fourth operating mode of the light source, all the light source modules of the fourth sub-light source are turned on, and all the light source modules of the first sub-light source, the second sub-light source, and the third sub-light source are turned off. In the technical solution of the embodiments of this application, light is controlled to be projected in one direction in which a shadow is perpendicular to the extension direction of the tab, avoiding the influence of light from other directions on the presentation of tab defects in the image. For the extension direction of the tab, light projection is performed at the widest range of angles to increase the amount of projected light, reducing the impact of light blockage by a side of the cell that is higher than the tab, thereby improving the clarity of tab defects in the image.

In some embodiments, each sub-light source includes two light source unit groups, where the light source unit group is a sector-ring area with a central angle of 45 degrees; and each light source unit group includes multiple light source units positioned at different distances from the image acquisition device, where light source units belonging to a same light source unit group of a sub-light source and at a same distance from the image acquisition device belong to a same light source module. In the technical solution of the embodiments of this application, a sub-light source includes two light source unit groups, where the two light source unit groups equally divide the central angle of the sub-light source, and on/off states of the light source unit groups can be independently controlled, further enhancing the flexibility of light angle and intensity control, which facilitates the adaptability of operating mode configurations and adaptability to tested equipment.

In some embodiments, the battery inspection apparatus further includes: a main bracket, including a support plate and a column fastened to a base plate, where the support plate is fastened to an end of the column away from the base plate and parallel to the tab area; and a shuttle device, movably fastened to the support plate, connected to the image acquisition device and the light source, and configured to drive the image acquisition device and the light source to move as the support plate moves. In the technical solution of the embodiments of this application, the main bracket movably fastens the shuttle device, facilitating stable adjustment of the position of the shuttle device, thereby achieving stable adjustment of the positions of the image acquisition device and the light source without adjusting the position of the cell. This enables inspection at different positions of the cell, avoiding damage to the tab caused by adjusting the position of the cell and reducing the rate of spoiled products.

In some embodiments, the battery inspection apparatus further includes: a height adjustment bracket, connected to the shuttle device and the image acquisition device, and configured to adjust a distance between the image acquisition device and the tab area. In the technical solution of the embodiments of this application, the distance between the image acquisition device and the tab area can be adjusted by adjusting the height adjustment bracket, enabling the battery inspection apparatus to inspect cells of different sizes and accommodate to height differences of cells.

In some embodiments, the battery inspection apparatus further includes a controller, configured to: control the light source to sequentially switch operating modes and control the image acquisition device to acquire an image of a first area of the target cell at least once under each operating mode of the light source; after receiving an acquisition completion signal for the image of the first area, control the shuttle device to move the image acquisition device from a first position to a second position; control the light source to sequentially switch operating modes and control the image acquisition device to acquire an image of a second area of the target cell at least once under each operating mode of the light source; and after receiving an acquisition completion signal for the image of the second area, control the shuttle device to move the image acquisition device from the second position to the first position. In the technical solution of the embodiments of this application, light projection onto the cell can be performed under multiple operating modes of the light source, and images of the tab area of the cell under each operating mode can be acquired, thereby fully exposing defects in the tab area and improving the comprehensiveness of tab area defect inspection. By automatically moving the image acquisition device, light projection and image acquisition can be performed separately for two parts of the tab area, enhancing the comprehensiveness of tab area defect inspection and improving automation and efficiency of inspection.

In some embodiments, the cell adhesive attachment system further includes an anomaly handling device, configured to move the target cell with an abnormal inspection result to a predetermined discard area. In the technical solution of the embodiments of this application, cells with detected defects can be automatically processed and moved to the discard area, avoiding subsequent processing such as adhesive attachment on abnormal cells, thereby reducing processing costs.

In some embodiments, the cell adhesive attachment system further includes a host computer, configured to receive an image from the battery inspection apparatus and determine an inspection result of the target cell based on the image. In the technical solution of the embodiments of this application, the host computer is configured to process the image acquired by the battery inspection apparatus. This can fully utilize computing power of the host computer, reducing the computing requirements on the battery inspection apparatus and facilitating coordinated control of another apparatus in the system by the host computer based on an inspection result

In some embodiments, the host computer is configured to determine the inspection result as abnormal if at least one of tab cracking, tab welding omission, or weld mark deviation is detected based on the image. In the technical solution of the embodiments of this application, the host computer can detect defects including tab cracking, tab welding omission, and weld mark deviation based on the image, improving the comprehensiveness of tab defect inspection and helping to improve a qualification rate and quality of cells.

According to a second aspect, this application provides a cell adhesive attachment method, including: welding a tab of a cell to an adapting piece to obtain a target cell and transferring the target cell to a battery inspection apparatus; projecting, by the battery inspection apparatus, light onto a tab area of the target cell under each operating mode of a light source and acquiring an image of the target cell under each operating mode through an image acquisition device, where the light source includes multiple sub-light sources arranged circumferentially at intervals along an image acquisition channel of the image acquisition device, and under different operating modes, an on/off state of at least one of the sub-light sources varies; determining an inspection result of the target cell based on the image; and transferring the target cell with a normal inspection result to an adhesive attachment device for adhesive attachment processing.

In the technical solution of the embodiments of this application, defect inspection of the tab area is performed after tab welding and before adhesive attachment, thereby avoiding obstruction of the tab area by the adhesive or failure to detect cracks caused by reflections after adhesive attachment, improving the accuracy of defect inspection. The light source of the battery inspection apparatus includes an image acquisition device and multiple sub-light sources arranged circumferentially along the image acquisition channel of the image acquisition device. Under different operating modes, the on/off state of at least one of the sub-light sources varies, enabling flexible control of at least one of an angle and intensity of light projected onto the tab area of the cell through switching of different operating modes, allowing defects in the tab area to be clearly presented in the image and improving accuracy of defect inspection.

In some embodiments, the projecting, by the battery inspection apparatus, light onto a tab area of the target cell under each operating mode of a light source and acquiring an image of the target cell under each operating mode through an image acquisition device includes: projecting light onto a first area of the target cell under each operating mode; acquiring an image of the first area of the target cell at least once under each operating mode of the light source; moving the image acquisition device and the light source from a first position to a second position, where the first position corresponds to the first area, and the second position corresponds to a second area of the target cell; projecting light onto the second area of the target cell under each operating mode; acquiring an image of the second area of the target cell at least once under each operating mode of the light source; and moving the image acquisition device and the light source from the second position to the first position.

In the technical solution of the embodiments of this application, light projection onto the cell can be performed under multiple operating modes of the light source, and images of the tab area of the cell under each operating mode can be acquired, thereby fully exposing defects in the tab area and improving the comprehensiveness of tab area defect inspection. By automatically moving the image acquisition device, light projection and image acquisition can be performed separately for two parts of the tab area, enhancing the comprehensiveness of tab area defect inspection, improving automation and efficiency of inspection.

In some embodiments, a maximum angle between a plane on which the tab area is located and light projected by the light source in an extension direction of the tab of the target cell is greater than a maximum angle between the plane on which the tab area is located and light projected by the light source perpendicular to the extension direction of the tab of the target cell on the plane on which the tab area is located. In the technical solution of the embodiments of this application, considering a height difference between an edge of the cell and the tab, for the extension direction of the tab, light projection is performed at the widest range of angles to increase the amount of projected light, reducing the impact of light blockage by the side of the cell that is higher than the tab, thereby improving the clarity of defects at the root of the tab in the image. For the direction in which a shadow is perpendicular to the extension of the tab, an amount of top light is reduced, allowing tab defects corresponding to a side light direction to be presented more clearly, thus improving the accuracy and efficiency of defect inspection.

In some embodiments, the cell adhesive attachment method further includes: moving the target cell with an abnormal inspection result to a predetermined discard area. In the technical solution of the embodiments of this application, cells with detected defects can be automatically processed and moved to the discard area, avoiding subsequent processing such as adhesive attachment on abnormal cells, thereby reducing processing costs.

In some embodiments, the determining an inspection result of the target cell based on the image includes: sending, by the battery inspection apparatus, the image to a host computer, and determining, by the host computer, the inspection result of the target cell based on the image. In the technical solution of the embodiments of this application, the host computer is configured to process the image acquired by the battery inspection apparatus. This can fully utilize computing power of the host computer, reducing the computing requirements on the battery inspection apparatus and facilitating coordinated control of another apparatus in the system by the host computer based on the inspection result.

The above description is merely an overview of the technical solutions of this application. To provide a clearer understanding of the technical means of this application and to enable implementation according to the content of the specification, and to make the above and other objectives, features, and advantages of this application more apparent and understandable, specific embodiments of this application are provided below.

### BRIEF DESCRIPTION OF DRAWINGS

Various other advantages and benefits will become apparent to those of ordinary skill in the art upon reading the detailed description of the preferred embodiments below. The drawings are provided for the purpose of illustrating the preferred embodiments only and are not considered to limit this application. Throughout the drawings, the same reference signs denote the same components. In the drawings:
FIG. 1 is a schematic diagram of a cell adhesive attachment system according to one or more embodiments of this application;
FIG. 2 is a schematic diagram of a welding process of a welding device in a cell adhesive attachment system according to one or more embodiments of this application;
FIG. 3 is a schematic diagram of light source partitioning in a cell adhesive attachment system according to one or more embodiments of this application;
FIG. 4 is a schematic diagram of operating states of a light source in first to fourth operating modes in a cell adhesive attachment system according to one or more embodiments of this application;
FIG. 5 is a schematic diagram of a battery inspection apparatus according to one or more embodiments of this application;
FIG. 6 is a schematic diagram of a defect in a tab area in a cell adhesive attachment system according to one or more embodiments of this application;
FIG. 7 is a schematic diagram of inspection area switching in a cell adhesive attachment system according to one or more embodiments of this application;
FIG. 8 is a schematic diagram of a cell adhesive attachment system according to another embodiment or more embodiments of this application;
FIG. 9 is a flowchart of a cell adhesive attachment method according to one or more embodiments of this application; and
FIG. 10 is a flowchart of a cell adhesive attachment method according to another embodiment or more embodiments of this application.

### DESCRIPTION OF EMBODIMENTS

The embodiments of the technical solutions of this application will be described in detail below with reference to the accompanying drawings. The following embodiments are merely used to more clearly illustrate the technical solutions of this application and are provided as examples only, and should not be construed as limitations to the protection scope of this application.

Unless otherwise defined, all technical and scientific terms used herein have the same meanings as commonly understood by those skilled in the art of this application. The terms used herein are for the purpose of describing specific embodiments only and are not intended to limit this application. The terms "include" and "have" and any variations thereof in the specification, claims, and the above description of the drawings of this application are intended to cover non-exclusive inclusion.

In the description of the embodiments of this application, technical terms such as "first" and "second" are used only to distinguish different objects and should not be understood as indication or implication of relative importance or implicit indication of a quantity, specific order, or hierarchical relationship of the indicated technical features. In the description of the embodiments of this application, "multiple" means two or more, unless otherwise explicitly and specifically defined.

Reference to an "embodiment" herein means that a particular feature, structure, or characteristic described with reference to the embodiment may be included in at least one embodiment of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein can be combined with other embodiments.

In the description of the embodiments of this application, the term "and/or" merely describes an association relationship between associated objects, indicating that three relationships may exist. For example, A and/or B may indicate: A exists alone, A and B exist simultaneously, or B exists alone. Additionally, the character "/" herein generally indicates that the associated objects before and after it are in an "or" relationship.

In the description of the embodiments of this application, the term "multiple" refers to two or more (including two). Similarly, "multiple groups" refers to two or more groups (including two groups), and "multiple pieces" refers to two or more pieces (including two pieces).

In the description of the embodiments of this application, the orientation or positional relationships indicated by technical terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" are based on the orientations or positional relationships shown in the drawings. These are merely for the convenience of describing the embodiments of this application and simplifying the description, and do not indicate or imply that the referred device or element must have a specific orientation, be constructed, or operate in a specific orientation. Therefore, they should not be construed as limitations to the embodiments of this application.

In the description of the embodiments of this application, unless otherwise explicitly specified and defined, technical terms such as "install", "connect", "join", and "fasten" should be understood in a broad sense. For example, they may refer to a fixed connection, a detachable connection, or an integral connection; they may refer to a mechanical connection or an electrical connection; they may refer to a direct connection or an indirect connection through an intermediary; they may refer to internal communication between two elements or an interaction relationship between two elements. For those of ordinary skill in the art, the specific meanings of the above terms in the embodiments of this application can be understood based on specific circumstances.

To achieve inspection of a tab area after welding, images are taken of the tab area after adhesive attachment, and defects in the tab area are identified based on the imaging results. Detectable defects include insufficient weld marks, absence of blue adhesive, incomplete tab coverage by blue adhesive, and the like. However, tab cracking cannot be effectively detected, so the automated inspection process does not include detection of tab cracking. Defects such as tab cracking may lead to overcurrent issues. To prevent the tab cracking defect of delivered battery cells, manual visual inspection is performed on the logistics line. However, manual inspection often fails to accurately identify small cracks, leading to missed detection. Additionally, during manual visual inspection, the cells are flipped to check for defects, which easily causes secondary cracking of the tab, increasing the risk of tab cracking.

To overcome the issues of low accuracy of tab defect inspection and potential product damage caused by manual assistance, this application proposes improving the clarity of images of the tab area acquired during inspection to achieve automated detection of tab cracking defects. Specifically, a battery inspection apparatus is improved to enhance the clarity of acquired images of the tab area and the presentation of defects in the tab area within the images. A sequence of welding, adhesive attachment, and inspection processes are adjusted, and relative positions of a battery inspection apparatus, a welding device, and an adhesive attachment device are adjusted, to improve the clarity of images acquired by the battery inspection apparatus, thereby reducing the difficulty of identifying tab cracking defects from the images and improving the accuracy of tab defect inspection.

Based on the above considerations, to address the issue of low accuracy in tab inspection, this application proposes a cell adhesive attachment system capable of flexibly adjusting an angle of light projected onto a tab area of a cell, allowing defects in the tab area to be clearly presented in an image. The inspection process for the tab area is positioned between welding and adhesive attachment, avoiding issues of obstruction of the tab area caused by the adhesive or failure to detect cracks caused by reflections after adhesive attachment, thereby improving the clarity of the tab area in the images and improving the accuracy of tab defect inspection.

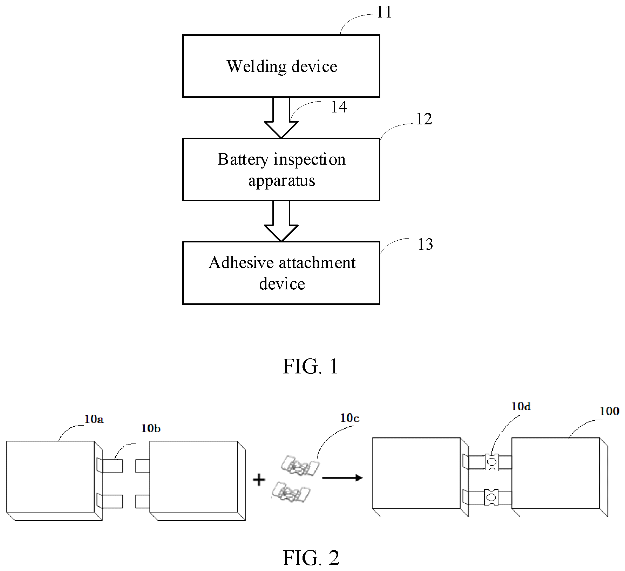

According to some embodiments of this application, as shown in FIG. 1, a battery inspection system includes a welding device 11, a battery inspection apparatus 12, an adhesive attachment device 13, and a transfer device 14.

The welding device 11 is configured to weld a tab of a cell to an adapting piece to obtain a target cell. In some embodiments, as shown in FIG. 2, when a cell 10a with a tab 10b reaches the welding device, the welding device 11 welds tabs of two cell units to each other via the adapting piece 10c to form a target cell 100. The tab area 10d of the target cell includes the tabs of the two cell units and the adapting piece.

The transfer device 14 is positioned between the welding device 11 and the battery inspection apparatus 12, and the transfer device 14 transfers the welded target cell to the battery inspection apparatus 12.

The battery inspection apparatus 12 can inspect the target cell and acquiring an image including the tab area of the target cell. In some embodiments, each image acquired by the battery inspection apparatus 12 includes only a cathode tab area or an anode tab area, thereby reducing an area range of each image acquisition and improving image clarity.

In some embodiments, the battery inspection apparatus 12 includes an image acquisition device and a light source, where the image acquisition device can acquire images of the tab area of the target cell. The light source includes multiple sub-light sources arranged circumferentially along an image acquisition channel of the image acquisition device, where each sub-light source can project light onto the tab area. Under different operating modes of the light source, an on/off state of at least one of the sub-light sources varies. In some embodiments, different sub-light sources are circumferentially spaced apart of the image acquisition channel, thereby controlling the light source to circumferentially project light onto the tab area from different positions of the image acquisition channel under different operating modes.

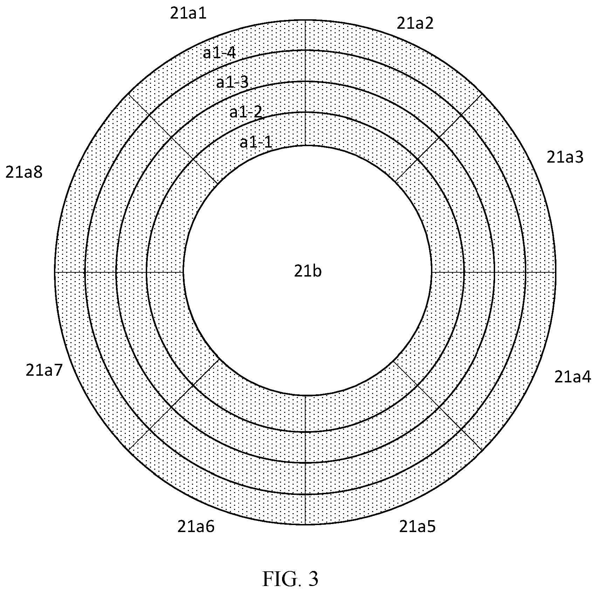

In some embodiments, a structure of the light source is as shown in FIG. 3, where a central area 21b is a cavity area of the light source located on the image acquisition channel of the image acquisition device, allowing light to pass through the central area 21b to reach the image acquisition device and preventing the light source from obstructing the image acquisition device. Sub-light sources are arranged circumferentially around the central area at intervals, as shown by 21a1 to 21a8 in the figure. One part or more contiguous parts of 21a1 to 21a8 belong to the same sub-light source, and positions of different sub-light sources do not overlap, ensuring that different sub-light sources have different relative angles to the tab area. The positions and shapes of the sub-light sources shown in the figure are feasible embodiments and do not constitute improper limitations to this application. In some embodiments, sizes of different sub-light sources may vary. In some embodiments, there are two or more sub-light sources.

In some embodiments, the light source is a programmable light source, and an on/off state of each sub-light source under different operating modes of light source can be determined through preset or real-time adjustment, thereby adjusting the on/off state of the sub-light source by changing operating modes during use, improving control convenience.

The adhesive attachment device 13 can perform adhesive attachment processing on an obtained target cell. The transfer device 14 is positioned between the adhesive attachment device 13 and the battery inspection apparatus 12, and the transfer device 14 transfers a target cell with a normal inspection result determined by the battery inspection apparatus 12 to the adhesive attachment device.

Based on the solution in the embodiment shown above, the light source of the battery inspection apparatus includes the image acquisition device and the multiple sub-light sources arranged circumferentially along the image acquisition channel of the image acquisition device. Under different operating modes, an on/off state of at least one of the sub-light sources varies, enabling flexible control of the angle of light projected onto the tab area of the cell through different operating modes, allowing defects in the tab area to be clearly presented in the image and improving the accuracy of defect inspection. Additionally, the battery inspection apparatus is positioned between the welding device and the adhesive attachment device, so that adhesive attachment is performed on the cell after the tab area is confirmed to be normal, avoiding obstruction of the tab area by the adhesive or failure to detect cracks caused by reflections after adhesive attachment, improving the accuracy of defect inspection.

In some embodiments, as shown in FIG. 3, at least one of the sub-light sources of the light source includes multiple light source modules positioned at different distances from the image acquisition device. In some embodiments, area 21a1 may be one sub-light source, with sub-areas a1-1, a1-2, a1-3, and a1-4 each being a light source module. In some embodiments, multiple contiguous areas among areas 21a1 to 21a8 may form one sub-light source, for example, areas 21a1 and 21a2 may form one sub-light source, and parts in a sub-light source at the same distance from the image acquisition channel form one light source module. A quantity and shape of light source modules included in the sub-light sources shown in FIG. 3 are feasible embodiments of this application and do not constitute improper limitations to this application. In some embodiments, quantities of light source modules in different sub-light sources may vary. In some embodiments, different light source modules in the sub-light source may be independently turned on or off, and under different operating modes of the light source, an on/off state of at least one light source module varies, enabling light source adjustment with a light source module as a control unit. In some embodiments, the light source is a programmable light source, so that an on/off state of each light source module under different operating modes of each sub-light source can be determined through preset or real-time adjustment, thereby adjusting the on/off state of the light source module by changing the operating mode during use, improving control convenience.

In the technical solution of this embodiment of this application, the sub-light source includes light modules positioned at different distances from the image acquisition device, allowing further flexible control of at least one of an angle and intensity of light projected onto the tab area of the target cell by controlling the on/off states of different light modules, improving the clarity of defects in the tab area in the images and improving the accuracy of defect inspection.

In some embodiments, as shown in FIG. 3, different light source modules belonging to a same sub-light source are positioned at different distances from the tab area. In some embodiments, this distance is the minimum distance from the light source module to a surface bearing the tab area. In some embodiments, from a light source module closest to the image acquisition device to a light source module farthest from the image acquisition device, distances to the tab area gradually decrease, as shown by sub-areas a1-1, a1-2, a1-3, and a1-4 in the figure, where a distance from sub-area a1-1 to the surface bearing the tab area > a distance from sub-area a1-2 to the surface bearing the tab area > a distance from sub-area a1-3 to the surface bearing the tab area > a distance from sub-area a1-4 to the surface bearing the tab area. In this way, light of the light source modules is not blocked by another light source module when light is projected onto the tab area.

In some embodiments, the light source has a dome-shaped structure with a through-hole at the top. Taking the light source structure shown in FIG. 3 as an example, 21b is a top through-hole area, and 21a1 to 21a8 form the dome-shaped structure surrounding the top through-hole area. In the technical solution of the embodiments of this application, the dome-shaped structure as a whole enhances the comprehensiveness of light angle coverage and facilitates maintaining the stability of the relative positions between sub-light sources and light source modules.

In some embodiments, the light source includes four sub-light sources, where each sub-light source is a sector-ring area with a central angle of 90 degrees, where a first sub-light source is adjacent to a second sub-light source and a fourth sub-light source. Taking the light source structure shown in FIG. 3 as an example, the first sub-light source includes areas 21a1 and 21a2, the second sub-light source includes areas 21a3 and 21a4, the third sub-light source includes areas 21a5 and 21a6, and the fourth sub-light source includes areas 21a7 and 21a8. The light source structure in the above embodiment ensures that light can be projected onto the tab area from every angle in the circumferential direction, enhancing the comprehensiveness of the light projection angles.

In some embodiments, the first sub-light source and the third sub-light source each include two or more light source modules positioned at different distances from the image acquisition device. Shadows of the second sub-light source and the fourth sub-light source are in an extension direction of the tab. Under an operating state, for the first sub-light source and the third sub-light source, a light source module farthest from the image acquisition device is turned on, and a light source module closest to the image acquisition device is turned off; and under an operating state, for the second sub-light source and the fourth sub-light source, all light source modules are turned on. In some embodiments, a shadow of a sub-light source being in the extension direction of the tab as described above may mean that a symmetry axis or center of the shadow of the sub-light source on the tab area is in the extension direction of the tab. In some embodiments, a shadow of a sub-light source being perpendicular to the extension direction of the tab as described above may mean that a symmetry axis or center of the shadow of the sub-light source on the tab area is perpendicular to the extension direction of the tab.

In the technical solution of the embodiments of this application, the sub-light sources of the light source are divided into four angles, including two directions along the extension of the tab and two directions perpendicular to the extension of the tab on a plane parallel to the surface bearing the target cell. The angle of light projection matches a tab deployment direction of the cell. For the extension direction of the tab, light projection is performed at the widest range of angles to increase an amount of projected light, reducing the impact of light blockage by a side of the cell that is higher than the tab, thereby improving the clarity of defects at the root of the tab in the image. For the direction perpendicular to the extension of the tab, an amount of top light is reduced, allowing tab defects corresponding to a side light direction to be presented more clearly, thus improving the accuracy and efficiency of defect inspection.

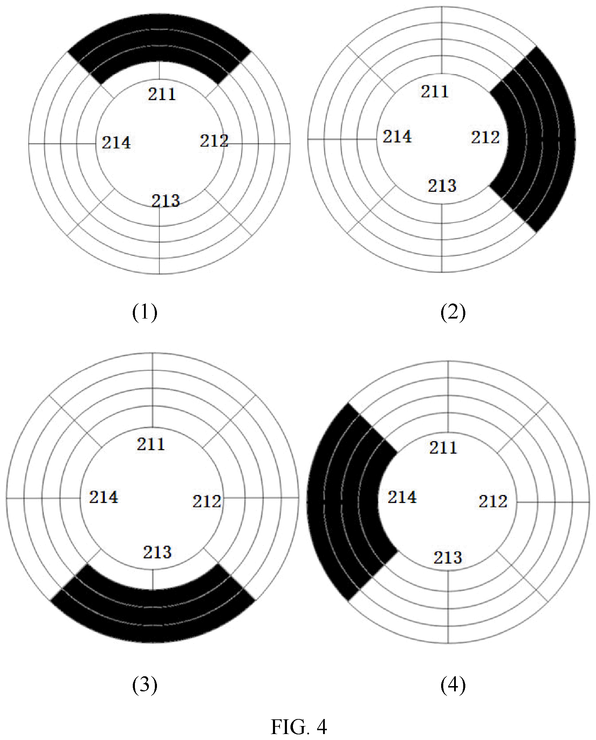

In some embodiments, taking the light source structure shown in FIG. 3 as an example, on/off states of light source modules under different operating modes of the light source are shown in FIG. 4, where black parts indicate light modules that are turned on, and white parts indicate light modules that are turned off.

FIG. 4(1) shows an on/off state of the battery inspection apparatus in a first operating mode of the light source. Light source modules of a first sub-light source 211 except a light source module closest to the image acquisition device are turned on, and all light source modules of the second sub-light source 212, the third sub-light source 213, and the fourth sub-light source 214 are turned off. In the technical solution of the embodiments of this application, light is controlled to be projected in one direction in which a shadow is perpendicular to the extension direction of the tab, avoiding the influence of light from other directions on the presentation of tab defects in the image, which facilitates the exposure of tab defects corresponding to the light projection direction. In cases where the tab has defects such as cracking, light can pass through the crack and illuminate a shade area that is supposed to be blocked by the tab, and this shade area is not illuminated by light from other sub-light source directions, fully exposing the tab defect in the image acquired by the image acquisition device. By turning off the light source module closest to the image acquisition device, the amount of top light projection is reduced, preventing excessive top light from affecting the clarity of defect presentation in the image, further facilitating the exposure of tab defects and improving the accuracy and comprehensiveness of defect inspection.

FIG. 4(2) shows an on/off state of the battery inspection apparatus under a second operating mode of the light source. Light source modules of the second sub-light source 212 are turned on, and all light source modules of the first sub-light source 211, the third sub-light source 213, and the fourth sub-light source 214 are turned off. In the technical solution of the embodiments of this application, light is controlled to be projected in one direction along the extension direction of the tab, avoiding the influence of light from other directions on the presentation of tab defects in the image. For the extension direction of the tab, light projection is performed at the widest range of angles to increase the amount of projected light, reducing the impact of light blockage by a side of the cell that is higher than the tab, thereby improving the clarity of tab defects in the image.

FIG. 4(3) shows an on/off state of the battery inspection apparatus under a third operating mode of the light source. Light source modules of the third sub-light source 213 except a light source module closest to the image acquisition device are turned on, and all light source modules of the first sub-light source 211, the second sub-light source 212, and the fourth sub-light source 214 are turned off. In the technical solution of the embodiments of this application, light is controlled to be projected in one direction in which a shadow is perpendicular to the extension direction of the tab, avoiding the influence of light from other directions on the presentation of tab defects in the image, which facilitates the exposure of tab defects corresponding to the light projection direction. By turning off the light source module closest to the image acquisition device, the amount of top light projection is reduced, preventing excessive top light from affecting the clarity of defect presentation in the image, further facilitating the exposure of tab defects and improving the accuracy and comprehensiveness of defect inspection.

FIG. 4(4) shows an on/off state of the battery inspection apparatus under a fourth operating mode of the light source. Light source modules of the fourth sub-light source 214 are turned on, and all light source modules of the first sub-light source 211, the second sub-light source 212, and the third sub-light source 213 are turned off. In the technical solution of the embodiments of this application, light is controlled to be projected in one direction along the extension direction of the tab, avoiding the influence of light from other directions on the presentation of tab defects in the image. For the extension direction of the tab, light projection is performed at the widest range of angles to increase the amount of projected light, reducing the impact of light blockage by a side of the cell that is higher than the tab, thereby improving the clarity of tab defects in the image.

In some embodiments, the battery inspection apparatus sequentially project light to the same tab area under each operating mode, thereby achieving comprehensive light projection on the same tab area, improving the comprehensiveness of defect inspection and enhancing the reliability of the battery.

In some embodiments, each sub-light source includes two light source unit groups, where the light source unit group is a sector-ring area with a central angle of 45 degrees. Taking the light source structure shown in FIG. 3 as an example, 21a1 to 21a8 in the figure represent eight light source unit groups. Light source unit groups 21a1 and 21a2 form the first sub-light source 211, light source unit groups 21a3 and 21a4 form the second sub-light source 212, light source unit groups 21a5 and 21a6 form the third sub-light source 213, and light source unit groups 21a7 and 21a8 form the fourth sub-light source 214. Taking light source unit group 21a1 as an example, each light source unit group includes multiple light source units positioned at different distances from the image acquisition device, where light source units belonging to a same light source unit group of a sub-light source and at the same distance from the image acquisition device belong to the same light source module. In the technical solution of the embodiments of this application, a sub-light source includes two light source unit groups, where the two light source unit groups equally divide the central angle of the sub-light source, and on/off states of the light source unit groups can be independently controlled, further enhancing the flexibility of light angle and intensity control, which facilitates the adaptability of operating mode configurations and adaptability to tested equipment.

In some embodiments, the light source is a programmable light source, so that the on/off states of the light source unit groups or light source units within the light source unit groups under different operating modes of the light source can be determined through preset or real-time adjustment. In this way, the on/off states of the light source units can be adjusted by changing the operating modes during use, improving control convenience.

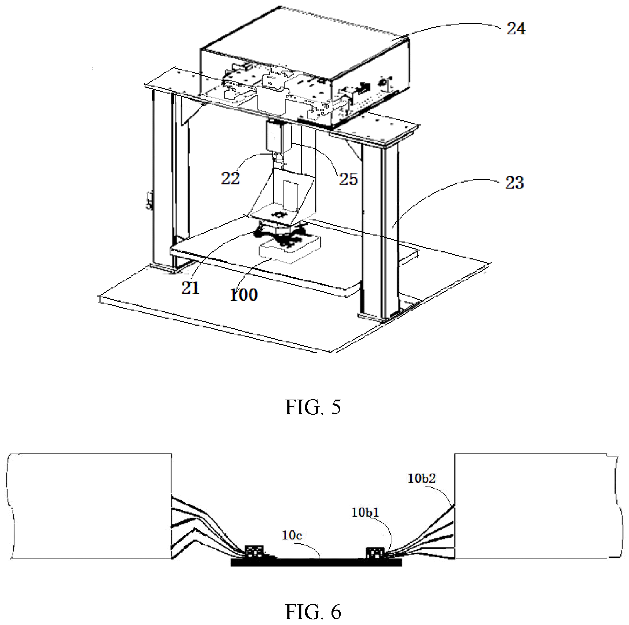

In some embodiments, the battery inspection apparatus is as shown in FIG. 5. The battery inspection apparatus includes a light source 21 and an image acquisition device 22. In some embodiments, the image acquisition device 22 includes a 1200W color camera and a 25 mm FA lens. The battery inspection apparatus further includes a main bracket 23 and a shuttle device 24. The main bracket 23 includes a column fastened to a base plate and a support plate fastened to an end of the column away from the base plate. The support plate is parallel to the tab area. The shuttle device 24 is movably fastened to the support plate of the main bracket 23. The shuttle device 24 is connected to the image acquisition device and the light source, capable of driving the image acquisition device and the light source to move as the support plate moves. On the surface of the battery inspection apparatus for bearing the target cell, the target cell 100 is placed. In the technical solution of the embodiments of this application, the main bracket movably fastens the shuttle device, facilitating stable adjustment of the position of the shuttle device, thereby achieving stable adjustment of the positions of the image acquisition device and the light source without adjusting the position of the cell. This enables inspection at different positions of the cell, avoiding damage to the tab caused by adjusting the position of the cell and reducing the rate of spoiled products.

In some embodiments, as shown in FIG. 5, the battery inspection apparatus further includes a height adjustment bracket 25 connected to the shuttle device and the image acquisition device, capable of adjusting a distance between the image acquisition device and the tab area. In the technical solution of the embodiments of this application, the distance between the image acquisition device and the tab area can be adjusted by adjusting the height adjustment bracket, enabling the battery inspection apparatus to inspect cells of different sizes and accommodate to height differences of cells.

In some embodiments, the battery inspection apparatus further includes a controller. In some embodiments, the controller may be located at any position on the battery inspection apparatus and is connected, electrically or via a signal, to the shuttle device 24, the image acquisition device 22, and the light source 21 of the battery inspection apparatus. In some embodiments, the controller may be deployed within the shuttle device 24, and this deployment position shortens the distance between the controller and the controlled objects, helping to improve control efficiency.

In some embodiments, the image acquisition device is located at a first position, where the first position is used for acquiring an image of a first area of the target cell. The controller may control the light source to sequentially switch operating modes and control the image acquisition device to acquire image of the first area of the target cell at least once under each operating mode of the light source. In some embodiments, the first area is an anode tab area or a cathode tab area within the tab area. In some embodiments, the operating modes of the light source include the first to fourth operating modes mentioned above. In some embodiments, after each switch of the operating mode of the light source, the image acquisition device acquires at least one image of the tab area, and upon completion of image acquisition under each operating mode, the image acquisition device sends an acquisition completion signal. After receiving the acquisition completion signal for the image of the first area from the image acquisition device, the controller controls the shuttle device to move the image acquisition device from the first position to a second position; and then controls the light source to sequentially switch operating modes and controls the image acquisition device to acquire an image of a second area of the target cell at least once under each operating mode of the light source. In some embodiments, the first area is a different area from the first area within the anode tab area or the cathode tab area of the tab area. In some embodiments, after each switch of the operating mode of the light source, the image acquisition device acquires at least one image of the tab area, and upon completion of image acquisition under each operating mode, the image acquisition device sends an acquisition completion signal. After receiving the acquisition completion signal for the image of the second area, the shuttle device is controlled to move the image acquisition device from the second position to the first position. In the technical solution of the embodiments of this application, light projection onto the cell can be performed under multiple operating modes of the light source, and images of the tab area of the cell under each operating mode can be acquired, thereby fully exposing defects in the tab area and improving the comprehensiveness of tab area defect inspection. By automatically moving the image acquisition device, light projection and image acquisition can be performed separately for two parts of the tab area, enhancing the comprehensiveness of tab area defect inspection, further improving image clarity and improving automation and efficiency of inspection.

In some embodiments, as shown in FIG. 6, the tab area of the target cell and parts of two cells adjacent to the tab area are included. The tab area includes an adapting piece 10c and a tab. Taking a tab of a right cell as an example, a head portion 10b1 is welded to the adapting piece 10c, and a root portion 10b2 is welded to the cell. Tab cracking may occur at any position of the tab, and cracking in any direction may affect the performance of the battery. Additionally, issues such as tab welding omission or weld mark deviation may occur at the head portion 10b1 and the root portion 10b2 of the tab, resulting in insufficiently tight connections between the tab and the adapting piece or between the tab and the cell, which may also affect the performance of the battery. In some embodiments, reducing top light and increasing a proportion of side light perpendicular to the extension direction of the tab facilitate clearer presentation in the image of insufficiently tight connections between the tab and the adapting piece or between the tab and the cell. In some embodiments, increasing top light in the extension direction of the tab facilitates clearer presentation of tab cracking defects in the image.

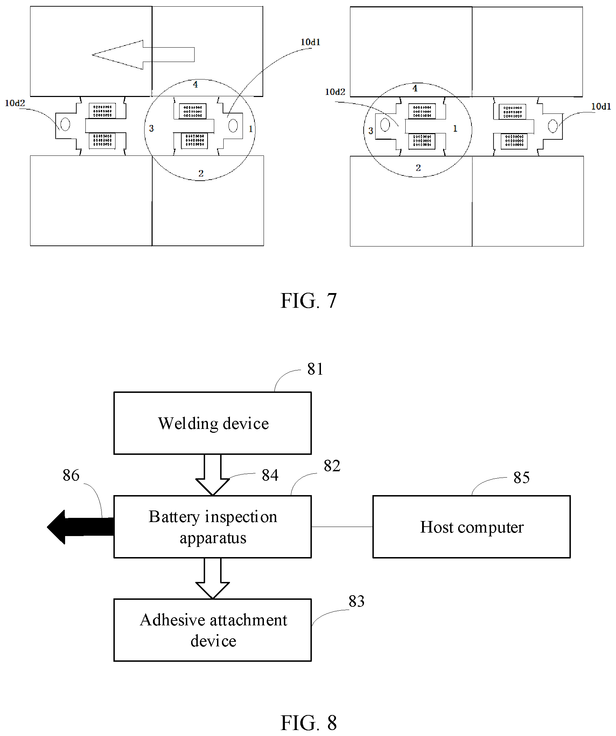

In some embodiments, as shown in FIG. 7, the tab area includes a first area 10d1 and a second area 10d2. The shadow of the light source on the tab area is shown as a circular area in FIG. 7. Labels 1, 2, 3, and 4 in the circular area represent positions of the first, second, third, and fourth sub-light sources, respectively. After the target cell is moved to the battery inspection apparatus, as shown in the left diagram of FIG. 7, light of the first sub-light source is projected onto the first area 10d1, and the image acquisition device acquires an image. Then the light source is switched to the second sub-light source to project light onto the first area 10d1, and the image acquisition device acquires an image. Further, the light source is switched to the third sub-light source to project light onto the first area 10d1, and the image acquisition device acquires an image. Finally, the light source is switched to the fourth sub-light source to project light onto the first area 10d1, and the image acquisition device acquires an image. The specific sequence of using sub-light sources may be set or adjusted as needed. After completing the above operations, image acquisition of the tab in the first area 10d1 is completed. The shuttle device drives the image acquisition device and the light source to move in the direction indicated by the arrow in FIG. 7, reaching a position shown in the right diagram of FIG. 7, to inspect the second area 10d2. The first sub-light source projects light onto the second area 10d2, and the image acquisition device acquires an image. Then, the light source is switched to the second sub-light source to project light onto the second area 10d2, and the image acquisition device acquires an image. Further, the light source is switched to the third sub-light source to project light onto the second area 10d2, and the image acquisition device acquires an image. Finally, the light source is switched to the fourth sub-light source to project light onto the second area 10d2, and the image acquisition device acquires an image. In some embodiments, after completing the above process, the shuttle device drives the image acquisition device and the light source to move in an opposite direction of the direction indicated by the arrow shown in FIG. 7, returning to the position shown in the left diagram, to prepare for inspecting a next target cell.

In the technical solution of the embodiments of this application, the tab area of a target cell is divided into two parts, and light illumination and image acquisition are performed on each part under each operating mode, increasing concentration of light from the light source on an inspected position, which facilitates further exposure of tab defects. This improves the clarity of each part in the image, further reducing the image processing burden for identifying defects in an image and helping to improve accuracy of defect inspection.

In some embodiments, as shown in FIG. 8, a welding device 81, a battery inspection apparatus 82, an adhesive attachment device 83, and a transfer device 84 are the same as or similar to the welding device 11, the battery inspection apparatus 12, the adhesive attachment device 13, and the transfer device 14 in the embodiment shown in FIG. 1. The cell adhesive attachment system includes a host computer 85 connected to the battery inspection apparatus via a signal, and may receive an image from the battery inspection apparatus and determine an inspection result of a target cell based on the image. In some embodiments, the cell adhesive attachment system sends the inspection result to the transfer device 84, and the transfer device 84 transfers the target cell to the adhesive attachment device if the inspection result is normal. In some embodiments, the host computer 85 determines the inspection result of the target cell based on the received image according to a built-in image inspection algorithm. In some embodiments, the image inspection algorithm may be a pre-trained machine learning algorithm and generated through training with images of normal and defective tab areas, and an inspection result may be output based on the input images, where the inspection result includes a normal result or a defective result. In some embodiments, the host computer may acquire an identifier of the target cell, such as a barcode of the target cell, and the host computer associates the identifier of the target chip with the inspection result of the target chip to generate and store cell inspection record information. In some embodiments, the host computer may associate an inspection item with the identifier of the target chip and the inspection result of the target chip to generate and store cell inspection record information, enhancing the comprehensiveness of the stored information.

In some embodiments, the host computer 85 can detect defects based on image inspection, including at least one of tab cracking, tab welding omission, or weld mark deviation. If at least one of tab cracking, tab welding omission, or weld mark deviation occurs, the inspection result is determined as abnormal, thereby improving the quality and reliability of a target cell determined to have a normal inspection result. In some embodiments, the host computer 85 and the light source and image acquisition device in the battery inspection apparatus 82 belong to a CCD (Charge-coupled Device, charge-coupled device) machine vision system.

In the technical solution of the embodiments of this application, the host computer is configured to process the image acquired by the battery inspection apparatus. This can fully utilize computing power of the host computer, reducing the computing requirements on the battery inspection apparatus and facilitating coordinated control of another apparatus in the system by the host computer based on the inspection result.

In some embodiments, as soon as an image is acquired, the image acquisition device sends the image to the host computer for defect identification. The host computer immediately processes the image and provides real-time feedback on abnormalities upon detecting a defect, allowing the battery inspection apparatus to skip subsequent inspections, thereby improving inspection efficiency.

In some embodiments, as soon as an image is acquired, the image acquisition device sends the image to the host computer for defect identification. The host computer performs image inspection after obtaining all images of an area (such as the anode tab area) and provides real-time feedback on abnormalities upon detecting a defect, allowing the battery inspection apparatus to skip subsequent inspections. This improves inspection efficiency while reducing image processing operations by the host computer, lowering the processing burden on the host computer.

In some embodiments, after completing the acquisition of all images for an area, the image acquisition device may send the images to the host computer. The host computer immediately performs defect inspection based on the images and provides real-time feedback on abnormalities upon detecting a defect, allowing the battery inspection apparatus to skip subsequent inspections. This improves inspection efficiency while reducing communication between the host computer and the battery inspection apparatus, lowering communication pressure.

In some embodiments, after completing the acquisition of all images for an area, the image acquisition device may send the images to the host computer. The host computer performs defect inspection after obtaining all images of the tab area of the same target cell and provides real-time feedback on abnormalities upon detecting a defect. This reduces communication between the host computer and the battery inspection apparatus, lowering communication pressure; and reduces image processing operations by the host computer, lowering the processing burden on the host computer.

In some embodiments, after completing the acquisition of all images of the tab area of a target cell, the image acquisition device sends the images to the host computer. The host computer performs defect inspection after obtaining the images, further reducing communication between the host computer and the battery inspection apparatus, lowering communication pressure.

In some embodiments, as shown in FIG. 8, the welding device 81, the battery inspection apparatus 82, the adhesive attachment device 83, and the transfer device 84 are the same as or similar to the welding device 11, the battery inspection apparatus 12, the adhesive attachment device 13, and the transfer device 14 in the embodiment shown in FIG. 1. The cell adhesive attachment system further includes an anomaly handling device 85 capable of moving the target cell with an abnormal inspection result to a predetermined discard area. In some embodiments, the anomaly handling device 84 may include a transfer device located between the battery inspection apparatus 12 and the predetermined discard area, capable of moving a target cell from the battery inspection apparatus 12 to the discard area. In some embodiments, the anomaly handling device 86 may be connected to the host computer via a signal and determine to move the target cell to the predetermined discard area based on a control signal from the host computer. In the technical solution of the embodiments of this application, the battery inspection system can automatically process cells with detected defects and move them to the discard area, avoiding subsequent processing such as adhesive attachment on abnormal cells, thereby reducing processing costs.

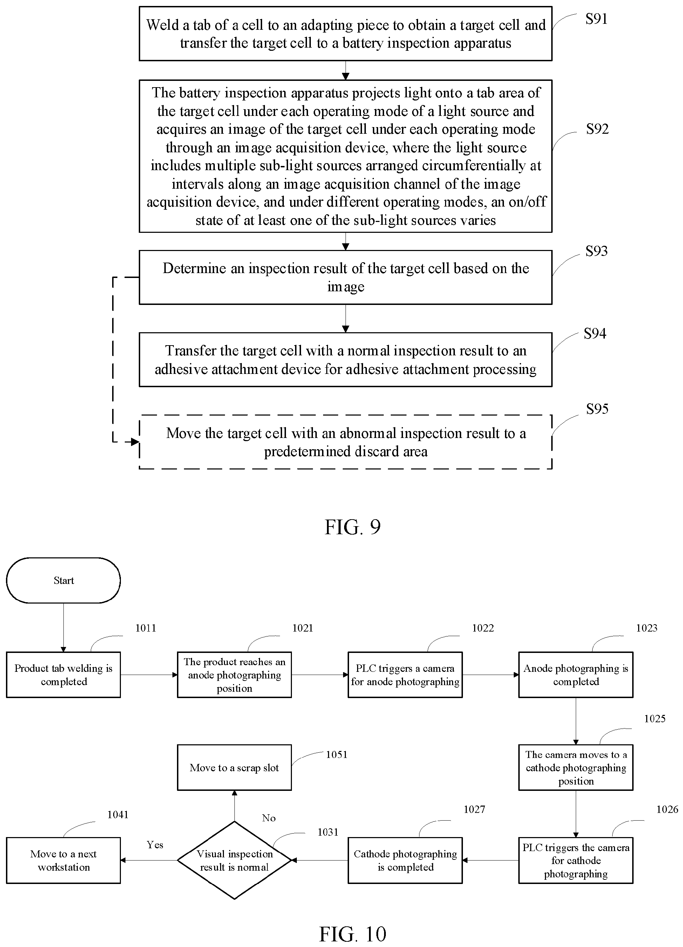

The embodiments of this application further propose a cell adhesive attachment method. In some embodiments, the cell adhesive attachment method, as shown in FIG. 9, includes steps S91 to S94.

In step S91, a tab of a cell is welded to an adapting piece to obtain a target cell and transfer the target cell to a battery inspection apparatus. In some embodiments, the welded target cell is transferred from the welding device to the battery inspection apparatus via a transfer device, thereby improving movement stability of the target cell and avoiding damage to the target cell.

In step S92, the battery inspection apparatus projects light onto a tab area of the target cell under each operating mode of a light source and acquires an image of the target cell under each operating mode through an image acquisition device, where the light source includes multiple sub-light sources arranged circumferentially at intervals along an image acquisition channel of the image acquisition device, and under different operating modes, an on/off state of at least one of the sub-light sources varies. In some embodiments, the battery inspection apparatus may be any of those mentioned above.

In step S93, an inspection result of the target cell is determined based on the image.

In step S94, the target cell with a normal inspection result is transferred to an adhesive attachment device for adhesive attachment processing.

In the technical solution of the embodiments of this application, defect inspection of the tab area is performed after tab welding and before adhesive attachment, thereby avoiding obstruction of the tab area by the adhesive or failure to detect cracks caused by reflections after adhesive attachment, improving the accuracy of defect inspection. The light source of the battery inspection apparatus includes an image acquisition device and multiple sub-light sources arranged circumferentially along the image acquisition channel of the image acquisition device. Under different operating modes, the on/off state of at least one of the sub-light sources varies, enabling flexible control of at least one of an angle and intensity of light projected onto the tab area of the cell through switching of different operating modes, allowing defects in the tab area to be clearly presented in the image and improving accuracy of defect inspection.

In some embodiments, as shown in FIG. 9, the battery inspection method further includes S95. When the inspection result of the target cell is determined to be abnormal in step S93, the target cell is moved to a predetermined discard area. In the technical solution of the embodiments of this application, the cell with a detected defect can be automatically processed and moved to the discard area, avoiding subsequent processing such as adhesive attachment on the abnormal cell, thereby reducing processing costs.

In some embodiments, in the above step S92, the image acquisition device and the light source are located at a first position, projecting light onto a first area of the target cell under each operating mode; and under each operating mode of the light source, an image of the first area of the target cell is acquired at least once. After completing image acquisition for the first area, the image acquisition device and the light source are moved from the first position to a second position, where the first position corresponds to the first area, and the second position corresponds to a second area of the target cell. After moving to the second position, the image acquisition device and the light source project light onto the second area of the target cell under each operating mode. Under each operating mode of the light source, an image of the second area of the target cell is acquired at least once. In some embodiments, after completing image acquisition for the second area, the image acquisition device and the light source are moved from the second position back to the first position to prepare for inspecting a next target cell.

In the technical solution of the embodiments of this application, light projection onto the cell can be performed using multiple operating modes of the light source, and an image of the tab area of the cell under each operating mode may be acquired, thereby fully exposing defects in the tab area and improving the comprehensiveness of tab area defect inspection. By automatically moving the image acquisition device, light projection and image acquisition can be performed separately for two parts of the tab area, enhancing the comprehensiveness of tab area defect inspection while improving automation and efficiency of inspection.

In some embodiments, in the above step S92, a maximum angle between a plane on which the tab area is located and light projected by the light source in an extension direction of the tab of the target cell is greater than a maximum angle between the plane on which the tab area is located and light projected by the light source in a direction perpendicular to the extension direction of the tab of the target cell on the plane on which the tab area is located. In the technical solution of the embodiments of this application, considering a height difference between an edge of the cell and the tab, reducing the projection of top light in the extension direction of the tab enhances the effect of side light, facilitating the exposure of defects at the root position of the tab welding and improving the accuracy and comprehensiveness of defect inspection.

In some embodiments, in the above step S93, the battery inspection apparatus sends the image to a host computer, and the host computer determines the inspection result of the target cell based on the image according to a built-in image inspection algorithm based on the image. In some embodiments, the image inspection algorithm may be a pre-trained machine learning algorithm and generated through training with images of normal and defective tab areas, and an inspection result may be output based on the input images, where the inspection result includes a normal result or a defective result. In some embodiments, the host computer sends the inspection result to the battery inspection apparatus or to a subsequent device of the battery inspection apparatus in the battery inspection system. In some embodiments, the host computer sends the inspection result to the transfer device to control a transfer direction of the transfer device.

In the technical solution of the embodiments of this application, the host computer is configured to process the image acquired by the battery inspection apparatus. This can fully utilize computing power of the host computer, reducing the computing requirements on the battery inspection apparatus and facilitating coordinated control of another apparatus in the system by the host computer based on an inspection result.

In some embodiments, taking a welding process of a bare lithium battery cell as an example, the battery inspection method of the present disclosure is as shown in FIG. 10.

In step 1011, after ultrasonic welding of a tab of a bare lithium battery cell, the tab is welded to an adapting piece, and after welding is completed.

In step 1021, the welded product reaches a photographing position of a battery inspection apparatus. An image acquisition device and a light source of the battery inspection apparatus are positioned at an anode tab photographing position.

In step 1022, a controller PLC (Programmable Logic Controller, programmable logic controller) triggers an anode photographing signal for a camera, and the camera performs photographing.

In step 1023, after photographing is completed, a CCD machine vision system including the image acquisition device feeds back an anode photographing completion signal to the PLC. In some embodiments, step 1024 is further included, where the CCD machine vision system sends an anode image acquired by the image acquisition device to a host computer.

In step 1025, after receiving the anode photographing completion signal, the PLC controls a transfer apparatus to move the image acquisition device and the light source to a cathode photographing position.

In step 1026, the PLC triggers a cathode photographing signal for the camera, and the camera performs photographing.

In step 1027, after photographing is completed, the CCD machine vision system feeds back a cathode photographing completion signal to the PLC. In some embodiments, step 1028 is further included, where the CCD machine vision system sends a cathode image acquired by the image acquisition device to the host computer.

In step 1031, the host computer processes the acquired images, determines an inspection result, and feeds the result to the transfer device. If the inspection result is normal, step 1041 is executed. If the inspection result is abnormal, step 1051 is executed.

In some embodiments, the inspection result may be output to a display connected to the host computer via a signal for viewing by staff; in some embodiments, the inspection result may be uploaded to an MES (Manufacturing Execution System, manufacturing execution system) for backup and subsequent use. In some embodiments, at least one of the displayed or uploaded information, in addition to the inspection result, includes at least one of an identifier of a target chip and an inspection item.

In step 1041, a product with a normal inspection result is transferred to a next workstation, such as an adhesive attachment device, via a logistics line.

In step 1051, a product with an abnormal inspection result is discarded to a scrap slot.

In the technical solution of the embodiments of this application, tab area inspection is performed immediately after welding, improving image contrast of the acquired tab area image. For example, in experiments, compared with images acquired after adhesive attachment, the acquired image has image contrast increasing from 25 to 100, and interference caused by adhesive reflection can be effectively eliminated, improving the effectiveness of detecting tab defects based on images. This enables the identification of issues such as tab cracking, tab welding omission, and weld mark deviation from images, improving automation of defect inspection, avoiding secondary damage caused by manual inspection, improving a product qualification rate.

The descriptions of the various embodiments above tend to emphasize the differences between the embodiments, and similarities or commonalities can be referenced mutually. For brevity, they are not reiterated herein.

Finally, it should be noted that the above embodiments are merely used to illustrate the technical solutions of this application and are not intended to limit them. Although this application is described in detail with reference to the foregoing embodiments, those of ordinary skill in the art should understand that modifications can still be made to the technical solutions described in the foregoing embodiments, or equivalent substitutions can be made to some or all of the technical features therein, and such modifications or substitutions do not cause the essence of the corresponding technical solutions to depart from the scope of the technical solutions of the embodiments of this application and should be encompassed within the scope of the claims and specification of this application. In particular, as long as there is no structural conflict, the various technical features mentioned in the embodiments can be combined in any manner. This application is not limited to the specific embodiments disclosed herein but includes all technical solutions falling within the scope of the claims.

## Claims

1. A cell adhesive attachment system, comprising:
a welding device, configured to weld a tab of a cell to an adapting piece to obtain a target cell;
a battery inspection apparatus, configured to inspect the target cell, wherein the battery inspection apparatus comprises:
an image acquisition device, configured to acquire an image of a tab area of the target cell; and
a light source, comprising multiple sub-light sources arranged circumferentially along an image acquisition channel of the image acquisition device, and configured to project light onto the tab area, wherein under different operating modes of the light source, an on/off state of at least one of the sub-light sources varies;
an adhesive attachment device, configured to perform adhesive attachment processing on the obtained target cell; and
a transfer device, configured to transfer the welded target cell to the battery inspection apparatus and to transfer the target cell with a normal inspection result to the adhesive attachment device.

2. The cell adhesive attachment system according to claim 1, wherein at least one of the sub-light sources comprises multiple light source modules positioned at different distances from the image acquisition device; and
different light source modules belonging to a same sub-light source are positioned at different distances from the tab area.

3. The cell adhesive attachment system according to claim 1, wherein the light source has a dome-shaped structure with a through-hole at a top.

4. The cell adhesive attachment system according to any one of claims 1 to 3, wherein the light source comprises four sub-light sources, wherein the sub-light source is a sector-ring area with a central angle of 90 degrees, wherein
a first sub-light source is adjacent to a second sub-light source and a fourth sub-light source;
the first sub-light source and a third sub-light source each comprise two or more light source modules positioned at different distances from the image acquisition device, and shadows of the second sub-light source and the fourth sub-light source are in an extension direction of the tab;
under an operating state, for the first sub-light source and the third sub-light source, a light source module farthest from the image acquisition device is turned on, and a light source module closest to the image acquisition device is turned off; and
under an operating state, for the second sub-light source and the fourth sub-light source, all the light source modules are turned on.

5. The cell adhesive attachment system according to claim 4, wherein
under a first operating mode of the light source, the light source modules of the first sub-light source except the light source module closest to the image acquisition device are turned on, and all the light source modules of the second sub-light source, the third sub-light source, and the fourth sub-light source are turned off.

6. The cell adhesive attachment system according to claim 4, wherein
under a second operating mode of the light source, all the light source modules of the second sub-light source are turned on, and all the light source modules of the first sub-light source, the third sub-light source, and the fourth sub-light source are turned off.

7. The cell adhesive attachment system according to claim 4, wherein
under a third operating mode of the light source, all the light source modules of the third sub-light source except the light source module closest to the image acquisition device are turned on, and all the light source modules of the first sub-light source, the second sub-light source, and the fourth sub-light source are turned off.

8. The cell adhesive attachment system according to claim 4, wherein
under a fourth operating mode of the light source, all the light source modules of the fourth sub-light source are turned on, and all the light source modules of the first sub-light source, the second sub-light source, and the third sub-light source are turned off.

9. The cell adhesive attachment system according to claim 4, wherein
each sub-light source comprises two light source unit groups, wherein the light source unit group is a sector-ring area with a central angle of 45 degrees; and
each light source unit group comprises multiple light source units positioned at different distances from the image acquisition device, wherein light source units belonging to a same light source unit group of a sub-light source and at a same distance from the image acquisition device belong to a same light source module.

10. The cell adhesive attachment system according to any one of claims 1 to 3, wherein the battery inspection apparatus further comprises:
a main bracket, comprising a support plate and a column fastened to a base plate, wherein the support plate is fastened to an end of the column away from the base plate and parallel to the tab area; and
a shuttle device, movably fastened to the support plate, connected to the image acquisition device and the light source, and configured to drive the image acquisition device and the light source to move as the support plate moves.

11. The cell adhesive attachment system according to claim 10, wherein the battery inspection apparatus further comprises:
a height adjustment bracket, connected to the shuttle device and the image acquisition device, and configured to adjust a distance between the image acquisition device and the tab area.

12. The cell adhesive attachment system according to claim 10, wherein the battery inspection apparatus further comprises a controller, configured to:
control the light source to sequentially switch the operating modes and control the image acquisition device to acquire an image of a first area of the target cell at least once under each operating mode of the light source;
after receiving an acquisition completion signal for the image of the first area, control the shuttle device to move the image acquisition device from a first position to a second position;
control the light source to sequentially switch the operating modes and control the image acquisition device to acquire an image of a second area of the target cell at least once under each operating mode of the light source; and
after receiving an acquisition completion signal for the image of the second area, control the shuttle device to move the image acquisition device from the second position to the first position.

13. The cell adhesive attachment system according to any one of claims 1 to 3, further comprising:
an anomaly handling device, configured to move the target cell with an abnormal inspection result to a predetermined discard area.

14. The cell adhesive attachment system according to claim 13, further comprising:
a host computer, configured to receive an image from the battery inspection apparatus and determine an inspection result of the target cell based on the image.

15. The cell adhesive attachment system according to claim 14, wherein the host computer is configured to determine the inspection result as abnormal if at least one of tab cracking, tab welding omission, or weld mark deviation is detected based on the image.

16. A cell adhesive attachment method, comprising:
welding a tab of a cell to an adapting piece to obtain a target cell and transferring the target cell to a battery inspection apparatus;
projecting, by the battery inspection apparatus, light onto a tab area of the target cell under each operating mode of a light source and acquiring an image of the target cell under each operating mode through an image acquisition device, wherein the light source comprises multiple sub-light sources arranged circumferentially at intervals along an image acquisition channel of the image acquisition device, and under different operating modes, an on/off state of at least one of the sub-light sources varies;
determining an inspection result of the target cell based on the image; and
transferring the target cell with a normal inspection result to an adhesive attachment device for adhesive attachment processing.

17. The cell adhesive attachment method according to claim 16, wherein
the projecting, by the battery inspection apparatus, light onto a tab area of the target cell under each operating mode of a light source and acquiring an image of the target cell under each operating mode through an image acquisition device comprises:
projecting light onto a first area of the target cell under each operating mode;
acquiring an image of the first area of the target cell at least once under each operating mode of the light source;
moving the image acquisition device and the light source from a first position to a second position, wherein the first position corresponds to the first area, and the second position corresponds to a second area of the target cell;
projecting light onto the second area of the target cell under each operating mode;
acquiring an image of the second area of the target cell at least once under each operating mode of the light source; and
moving the image acquisition device and the light source from the second position to the first position.

18. The method according to claim 16 or 17, wherein
a maximum angle between a plane on which the tab area is located and light projected by the light source in an extension direction of the tab of the target cell is greater than a maximum angle between the plane on which the tab area is located and light projected by the light source in a direction perpendicular to the extension direction of the tab of the target cell on the plane on which the tab area is located.

19. The method according to claim 16 or 17, further comprising:
moving the target cell with an abnormal inspection result to a predetermined discard area.

20. The method according to claim 16 or 17, wherein the determining an inspection result of the target cell based on the image comprises:
sending, by the battery inspection apparatus, the image to a host computer, and determining, by the host computer, the inspection result of the target cell based on the image.
